# Europäisches Patentamt
# European Patent Office
# Office européen des brevets

(19)

(11) Publication number: **0 018 710**
**B1**

(12)

# EUROPEAN PATENT SPECIFICATION

(45) Date of publication of patent specification: **18.05.83**

(51) Int. Cl.³: **B 23 Q 15/10**

(21) Application number: **80300755.8**

(22) Date of filing: **12.03.80**

(54) A method of machining a workpiece, and an apparatus for controlling feed rate of a workpiece machining cutter.

(30) Priority: **13.03.79 JP 29086/79**

(43) Date of publication of application:
**12.11.80 Bulletin 80/23**

(45) Publication of the grant of the patent:
**18.05.83 Bulletin 83/20**

(84) Designated Contracting States:
**DE FR GB**

(56) References cited:
**GB - A - 1 035 910**
**US - A - 3 705 339**

**MACHINERY, vol. 84, April 23, 1954, Burgess Hill, GB DUTCHER J. "Maintaining Constant Surface Speed", pages 846—852.**

(73) Proprietor: **Fanuc Ltd**
**5-1, Asahigaoka, 3-chome**
**Hino-shi, Tokyo 191 (JP)**

(72) Inventor: **Kohzai, Yoshinori**
**16-3, Hirayama, 2-chome Hino-shi**
**Tokyo (JP)**
Inventor: **Kawada, Shigeki**
**346-15, Oaza-Shimoda Hino-shi**
**Tokyo (JP)**
Inventor: **Fujioka, Yoshiki**
**3-27, Tamadaira, Hino-shi**
**Tokyo (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Courier Press, Leamington Spa, England.

# A method of machining a workpiece, and an apparatus for controlling feed rate of a workpiece machining cutter

This invention relates to a method of machining a workpiece, and an apparatus for controlling feed rate of a workpiece machining cutter.

In machine tools, particularly lathes, it is usual for a cutting operation to be performed whilst the circumferential speed of a workpiece is controlled so as to remain constant. Cutting a workpiece when using such circumferential speed control can afford the following advantages:

(1) The smoothness and luster of the workpiece surface are enhanced;

(2) Machining time (cutting) is shortened; and

(3) Cutting quantity can be held constant.

The output power P (KW) of a spindle motor employed in a machine tool such as a lathe rises linearly until a specified speed (referred to as the base speed) Nb is attained, and then stays at a constant maximum value $P_{max}$ thereafter. The cutting quantity Q is dependent upon the spindle motor output power P. Hence, the cutting quantity Q can be maximised and held constant at a maximum value $Q_{max}$ when the motor is operating at or above the base speed $N_b$, but decreases in dependence upon speed for motor speed values less than $N_b$.

In control systems for maintaining a constant circumferential speed for a workpiece, the greater the outer diameter of a workpiece, the lower the motor or spindle speed $N_s$ need be set, the latter speed falling below the base speed $N_b$ if the outer diameter of the workpiece is greater than a certain value. Accordingly when machining a workpiece having a large outer diameter using a previously proposed control system for maintaining a constant circumferential speed and, hence, a constant cutting quantity, it is conventional practice not to perform cutting at the maximum cutting quantity $Q_{max}$ based on the maximum output of the spindle motor, but to perform cutting of a certain derived cutting quantity Q. This is accomplished by first obtaining a minimum spindle speed value, which is determined in dependence upon the maximum outer diameter $D_{max}$ of the workpiece, calculating the motor output power P (less than $P_{max}$) which conforms to the minimum spindle speed value consistent with $D_{max}$ and the circumferential speed, and then finally obtaining the cutting quantity Q (less than $Q_{max}$) as determined by this output power P. The cutting operation is then a matter of determining a cutter feed rate $f_r$ so as to provide the cutting quantity Q, and feeding the cutter in accordance with this feed rate $f_r$.

Using this conventional practice, however, the motor or spindle speed $N_s$ will eventually surpass the base speed $N_b$ owing to the gradual decrease in workpiece diameter as machining progresses. The cutting conditions may thus become such as will allow cutting to advance at a rate in accordance with the maximum cutting quantity $Q_{max}$, but in the foregoing conventional practice machining is nevertheless constrained to proceed in accordance with the constant cutting quantity Q. As a result, cutting in accordance with conventional circumferential speed control is beset by problems since it does not have the merit of constant circumferential speed control such as to permit full exploitation of spindle motor output power nor does it always provide a satisfactory shortening of machining time.

There is thus a demand for the provision of cutter feed rate control that has the capability of cutting a workpiece in accordance with a maximum cutting quantity $Q_{max}$ even if the workpiece has a large outer diameter, or in other words, that permits spindle motor output power to be utilised to the fullest possible extent.

The article "Maintaining Constant Surface Cutting Speed in "MACHINERY", Volume 84, page 846, April 23, 1954, discloses a method of machining a workpiece in which the workpiece is rotated on a spindle driven by an electric motor having a constant torque characteristic operating region below a base speed of the motor and a constant output power characteristic operating region above the base speed. Whilst a cutter machines the circumference of the workpiece the speed of the spindle is caused to change in accordance with the cutting diameter of the workpiece, so that a constant surface cutting speed is maintained. A tachometer is used to derive the speed of the drive motor and a rheostat is used to sense cross feed of the cutter. A comparison of the tachometer and rheostat outputs is effected and control of the drive motor speed is effected on the basis of the comparison to provide a constant surface cutting speed.

United States Patent Specification No. 3,705,339 discloses automatic servomotor control for lathes. Feed supply means are provided which automatically feed a part being machined relative to a cutter tool. Spindle motor control means are provided for controlling the spindle speed of the lathe. Change-in-radius control means derive a speed control signal related to the change in radius of the part being machined. The output speed control signal from the change-in-radius control means is supplied to the spindle speed control means whereby the spindle speed of the lathe is adjusted automatically with changes in radius of a part being machined to maintain a desired value of surface feed per minute moving past the lathe cutter tool. Preferably, a spindle speed indicating control signal representative of the spindle speed is provided by encoding means. Means are then provided for slaving operation of the feed supply means to the spindle speed to thereby automatically slave the feed rate operation of the lathe through the lathe spindle speed through the medium of the spindle speed indicating control signal whereby the feed rate and hence chip removal can be made proportional to the spindle speed measured in surface feet per minute and a controlled thickness of chip removal can be achieved.

According to the present invention there is provided a method of machining a workpiece, in which the workpiece is rotated on a spindle driven by an electric motor having a constant torque characteristic operating region and a constant output power characteristic operating region, and in which motor speed is controlled so that the circumferential speed of the workpiece is maintained constant whilst a cutter machines the circumference thereof (at least until a maximum motor speed is attained), characterized by:—

storing a maximum cutter cross feed rate $f_{rmax}$ which is computed from the constant circumferential speed $V_c$ of the workpiece, a cutting width $d$ of the cutter, and a maximum cutting quantity $Q_{max}$ determined by the maximum power $P_{max}$ of the motor;

computing spindle speed $N_s$ in accordance with the equation $N_s = V_c/\pi . D$ where D is the cutting diameter of the workpiece;

comparing the magnitude of the spindle speed $N_s$ with the magnitude of a predetermined base speed $N_b$, defined as a spindle speed at which there is a transition from the constant torque characteristic operating region of the motor to the constant output power characteristic operating region thereof; and

feeding the cutter at the cross feed rate $f_{rmax}$ when $N_s \geqslant N_b$ and at a cross feed rate which is reduced in conformance with the spindle speed $N_s$ when $N_s < N_b$.

According to the present invention there is also provided apparatus for machining a workpiece, in which the workpiece is rotated on a spindle driven by an electric motor having a constant torque characteristic operating region and a constant output power characteristic operating region, the apparatus comprising means for controlling the speed of the motor so that the circumferential speed of the workpiece is maintained constant whilst a cutter of the apparatus machines the periphery thereof (at least until a maximum motor speed is attained), characterised by:—

memory means for storing a maximum cutter cross feed rate $f_{rmax}$ (which maximum cross feed rate depends upon the constant circumferential speed $V_c$ of the workpiece, a cutting width $d$ of the cutter, and a maximum cutting quantity $Q_{max}$ determined by the maximum power $P_{max}$ of the motor);

spindle speed computing means for computing spindle speed $N_s$ in accordance with the equation $N_s = V_c/\pi . D$ where D is the cutting diameter of the workpiece;

comparing means for comparing the magnitudes of a predetermined base speed $N_b$ and the computed spindle speed $N_s$, where the base speed $N_b$ is defined as a spindle speed at which there is a transition from the constant torque characteristic operating region of the motor to the constant output power characteristic operating region thereof;

cutter feed rate computing means for computing a cutter cross feed rate $f_r$ in accordance with the maximum cutter cross feed rate $f_{rmax}$, the predetermined base speed $N_b$ and the computed spindle speed $N_s$, which is reduced in conformance with the computed spindle speed $N_s$; and

means operable to deliver cutter feed rate command signals such that the maximum feed rate $f_{rmax}$ is commanded when $N_s \geqslant N_b$ and such that a feed rate $f_r$ is commanded when $N_s < N_b$.

Embodiments of the present invention can provide for cutter cross feed rate control suited particularly for a machine tool in which an electric motor having a constant torque characteristic region and constant output characteristic region is employed for driving a spindle in such a way that the machine tool can cut a workpiece whilst the circumferential speed of the workpiece is held constant by the motor.

An embodiment of the present invention provides for cutter cross feed rate control such that a cutting operation can be performed in which the output power of a spindle motor is fully exploited at all possible times, this being achieved by performing cutting in accordance with a maximum cutting quantity $Q_{max}$, namely by feeding the cutter at a maximum cross feed rate, when the speed of the spindle is higher than a base speed, and by performing cutting in accordance with a cutting quantity reduced in accordance with spindle speed, namely by reducing the cross feed rate of the cutter in accordance with spindle speed, when the speed of the spindle is lower than the base speed.

An embodiment of the present invention provides for shortened cutting time, even for workpieces of a large outer of cutting diameter, by increasing cutting quantity as the cutting diameter of the workpiece diminishes with the advance of machining, or in other words, as the speed of the spindle increases.

Further an embodiment of the present invention provides cutter cross feed rate control apparatus that enables full utilization of spindle-motor output power, as well as a system that permits the radius of a workpiece to be monitored in a simple manner.

Reference will now be made, by way of example, to the accompanying drawings, in which:—

Fig. 1 is a graph showing the output power versus speed characteristic of an electric motor;

Fig. 2 is a series of schematic diagrams (a) to (d) for assistance in explanation of cutting control in which circumferential speed of a workpiece is maintained at a constant value in accordance with a previous proposal;

Fig. 3 is a series of schematic diagrams (a) to (e) for assistance in explanation of cutting control as provided by an embodiment of the present invention;

Fig. 4 is a schematic block circuit diagram of cutter feed rate control apparatus embodying the present invention;

Fig. 5 is a flow chart for assistance in explanation of cutting control as employed in an embodiment of the present invention;

Fig. 6 is a schematic block circuit diagram illustrating means employed for effecting cutter feed rate control in an embodiment of the present invention.

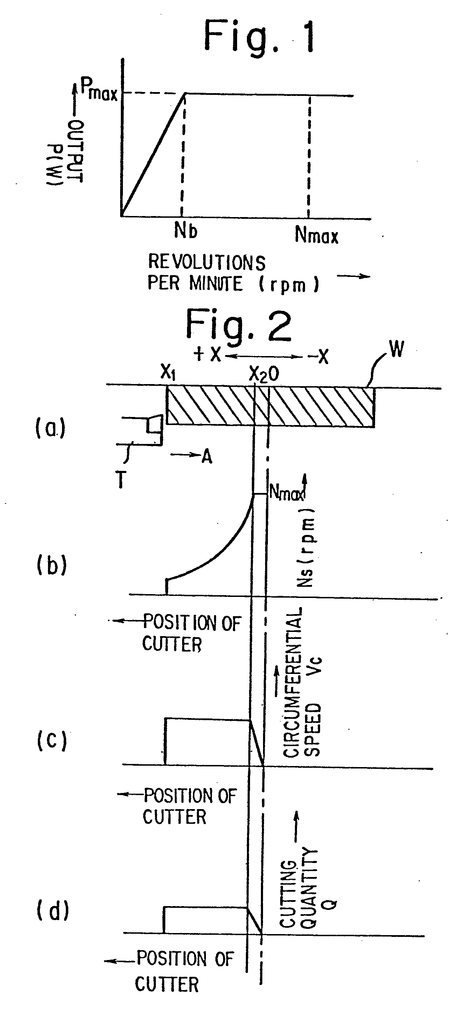

Reference will first be made to Fig. 1 which shows a graph useful for understanding the output characteristic (output power versus speed characteristic) of an electric motor. The motor output power P can be seen to rise linearly until the spindle speed attains a value $N_b$, after which the output power levels off at a constant value $P_{max}$. Torque $\tau$, though not shown in the graph of Figure 1, is related to output power P and motor or spindle speed $N_s$ by the equation $P = \kappa \times N_s \times \tau$ ($\kappa$:1.0269), and thus can be understood to be constant until the spindle speed attains the value $N_b$, whereafter the torque is in inverse proportion to speed $N_s$. The respective regions in which constant output power and constant torque are provided shall be referred to as the constant output characteristic region and the constant torque characteristic region, respectively, while the spindle speed $N_b$, at which there is a transition from the constant output characteristic region to the constant torque characteristic region, shall be referred to as the base speed.

A quantity Q which can be cut by a cutting tool depends upon the output power of the spindle motor and can therefore be held constant at a large value for spindle speeds above $N_b$, although Q will decrease for speeds below $N_b$ in accordance with the dependence of Q upon spindle speed. It should also be noted that the constant output characteristic region generally covers 2/3 to 3/4 of the overall range of possible motor speeds.

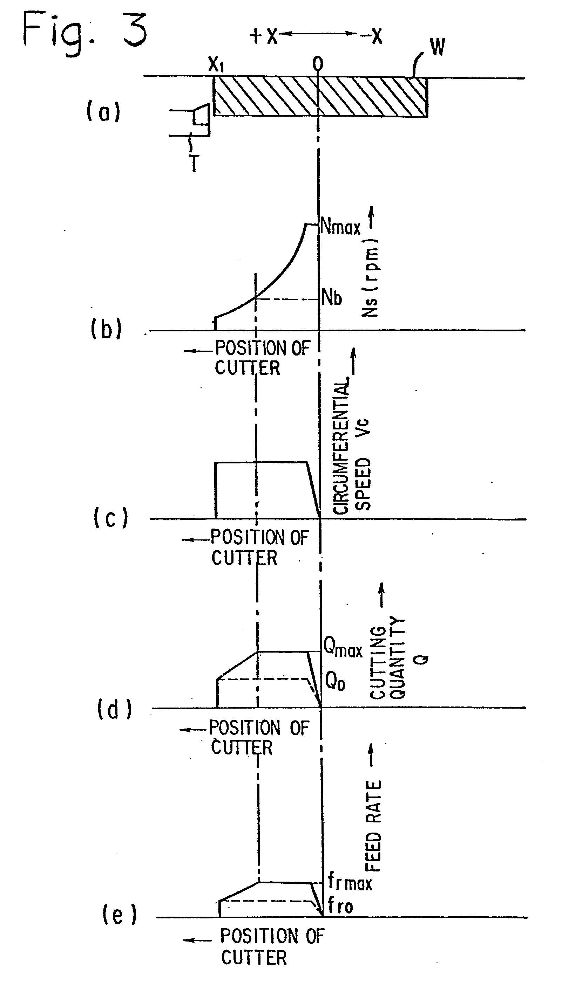

Spindle speed $N_s$, when the circumferential speed of a workpiece is controlled so as to be held constant, can be expressed by the equation

$$N_s = V_c/\pi \cdot D \qquad (1)$$

where $V_c$ is the circumferential speed of the workpiece and D the outer or cutting diameter of the work-piece. From equation (1) it follows that the greater the cutting diameter D of the workpiece, the smaller the spindle speed $N_s$ for a given circumferential speed, with $N_s$ falling below the base speed $N_b$ if the cutting diameter of the workpiece exceeds a certain value. A workpiece having a large cutting diameter therefore cannot be cut at the maximum cutting quantity $Q_{max}$ which is determined by the maximum motor output $P_{max}$. Accordingly, in order to effect control such that the cutting quantity remains constant whilst the circumferential speed is similarly controlled, conventional practice prescribes a calculation of the motor output P which conforms to the minimum spindle speed as required by the maximum cutting diameter $D_{max}$ of the workpiece, obtaining the cutting quantity $Q(<Q_{max})$ as decided by the output P, and then determining cutter cross feed rate $f_r$ so as to satisfy this cutting quantity. However, the cutting diameter of the workpiece gradually decreases as machining progresses, and so it will eventually become possible to carry out machining in accordance with the maximum cutting quantity $Q_{max}$ because the spindle speed will eventually surpass the base speed. Unfortunately, however, no change in the cutting quantity Q can be achieved with conventional control as illustraated by means of Figure 2 even if this state is a attained, and it is therefore not possible to cut a workpiece in a way making full use of the motor output power. However, it must be pointed out that a cutting operation in accordance with the maximum cutting quantity $Q_{max}$ can be conducted, with such conventional control, so long as the minimum spindle speed, determined in dependence upon the maximum cutting diameter $D_{max}$ of the workpiece, in greater than the base speed $N_b$. In other words, with such conventional control, the lower the base speed $N_b$ (the wider the constant output characteristic region), or the smaller the maximum outside diameter $D_{max}$ of the workpiece, the more likely it is that machining can be performed in accordance with the maximum cutting quantity $Q_{max}$. Accordingly, as far as the motor is concerned, it is desirable that the constant output characteristic region of the motor has a sufficient width.

Conventional cutting control is illustrated by means of diagrams (a) to (d) in Figure 2. Diagram (a) shows a cutter designated T and a workpiece designated W and also illustrates the cutting direction (indicated by an arrow A) of the cutter T, as well as the coordinates of the workpiece W. Specifically, the center of the workpiece is located at an origin (X=0) whilst one end (the perimeter) thereof is at a coordinate $X_1$ (The maximum diameter of the workpiece $D_{max} = X_1$). Diagram (b) illustrates how motor or spindle speed $N_s$ is related to cutter position, i.e. the cutting diameter of the workpiece, as the diameter is reduced. Thus it can be appreciated that the cutting diameter of workpiece W decreases as machining by cutter T progresses, and that the spindle speed NS

$(=V_c/\pi . D)$ rises. The smaller the diameter of the workpiece W, the greater the spindle speed $N_s$, although spindle speed will not rise above the constant speed $N_{max}$, owing to the characteristics of the motor, and levels off at $N_{max}$ where $X=X_2$ in the illustrated case. Diagram (c) shows the circumferential (cutting) speed $V_c$ $(=\pi N_s . D)$ also plotted against cutter position, and it will be noted that the circumferential speed $V_c$ decreases linearly when the outer diameter of workpiece W is in a region of small values (i.e. outer diameter less than $X_2$), this occurring after the spindle speed $N_s$ has reached $N_{max}$. Finally, diagram (d) illustrates cutting quantity Q versus cutter position, from which it can be seen that the magnitude of Q depends upon motor output power P at the minimum value of spindle speed $N_s$, which is decided by $V_c/\pi . D_{max}$ and is dependent upon the maximum outer diameter of the workpiece.

Thus it can be appreciated from the foregoing that conventional circumferential speed control is flawed in that the cutting quantity is determined by the motor output power P (which is less than $P_{max}$) when the cutting diameter of the workpiece is at a maximum. This means that the output power of the motor cannot be utilized fully because cutting quantity is unchangeable even when machining has progressed to a stage at which $P_{max}$ could be utilized.

Features of the present invention can be understood from diagrams (a) to (e) of Fig. 3 which illustrate the interrelationships between motor or spindle speed $N_s$, circumferential speed $V_c$, cutting quantity Q, cutter cross feed rate $f_r$, and the cutter position or radius of workpiece when control in accordance with an embodiment of the invention is exercised. In Figure 3 broken lines in the diagrams refer to conventional control as illustrated in Figure 2.

The cutting quantity Q, as discussed above with reference to conventional control as in Figure 2, is fixed by the motor speed and by the motor output characteristic which prevail when the outer or cutting diameter of the workpiece has its maximum value, and it is this unfortunate feature of such conventional control that denies fulll utilization of motor performance, this stemming from the fact that the cutting quantity Q cannot be changed even when the outer diameter of the workpiece decreases as machining progresses. However, cutting at a constant circumferential speed whilst fully exploiting motor performance can be made possible if the cutting quantity is enlarged in conformance with the motor output characteristic as the workpiece undergoes the gradual reduction in its cutting diameter due to the cutting operation.

Since a proportional relationship generally exists between motor output P and cutting quantity Q, full use of motor performance can be achieved by effecting control such that, with the spindle speed $N_s$ less than the base speed $N_b$ $(N_s<N_b)$, the cutting quantity Q is enlarged in proportion to $N_s$ as the cutting diameter of the workpiece diminishes, namely as $N_s$ increases, but is maintained constant at a maximum cutting quantity $Q_{max}$ in the region where $N_s \geq N_b$.

The cutting quantity Q can be expressed by the following equation

$$Q=f_r . d . V_c \qquad (2)$$

where $V_c$ is the circumferential speed of a workpiece, $d$ the width of the cutter, and $f_r$ the cross feed rate of the cutter.

When spindle speed $N_s$ is greater than the base speed $N_b$, the cutting quantity Q assumes a constant value $Q_{max}$ which is determined by the maximum output $P_{max}$ of the motor. The maximum cutter cross feed rate $f_{rmax}$ for obtaining $Q_{max}$ can therefore be determined from the following equation

$$f_{rmax}=Q_{max}/d . V_c \qquad (3)$$

where it is to be noted that $d$ is a constant determined by the dimensions of the cutter, and that the circumferential speed $V_c$ is a quantity which, once set, is not changed, for to do so would not allow good surface smoothness and luster to be obtained.

Thus, in order to accomplish cutting at a constant circumferential speed $V_c$ while taking full advantage of motor performance, the cross feed rate $f_r$ of the cutter should be held constant at $fr_{max}$ for $N_s \geq N_b$, but should be varied in proportion to $N_s$ for $N_s<N_b$. Moreover, an initial cutting quantity $Q_0$ should be derived in dependence upon motor speed and motor output characteristic at the time when the workpiece has its maximum diameter, and a cross feed rate $f_r$ $(=Q_0/d .V_c)$ derived in accordance with equation (2) taken as an initial cross feed rate $fr_0$.

Thus, in accordance with the features of the present invention as explained above, $fr_{max}$ is obtained from equation (3), and cutter cross feed rate $f_r$ is determined in accordance with

$$f_r=f_{rmax} \qquad (4)$$

for $N_s$ $(=Vc/\pi . D) \geq Nb$, and from

$$f_r=f_{rmax} . \frac{Ns}{Nb} \qquad (5)$$

for $N_s<N_b$.

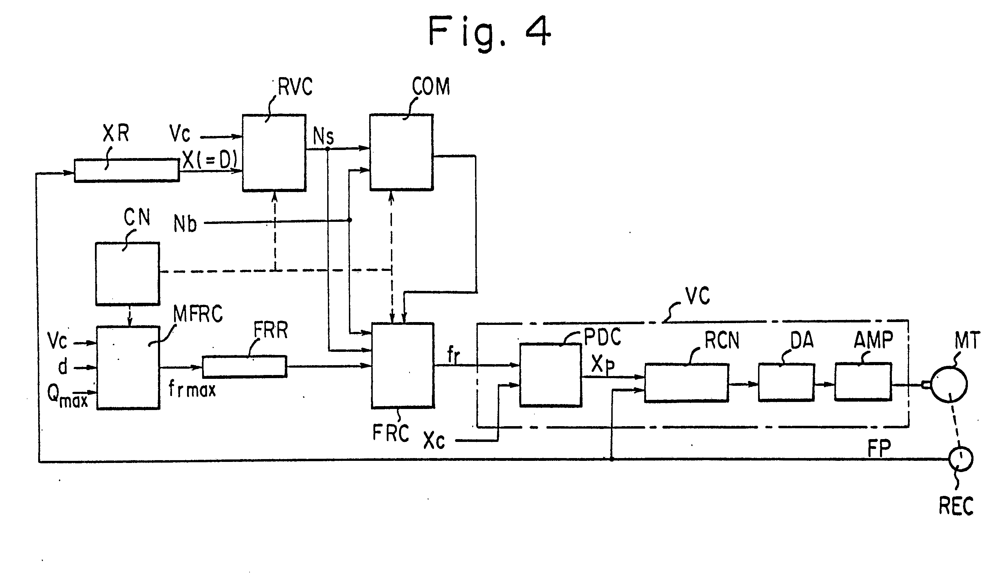

The block circuit diagram of Figure 4 illustrates apparatus embodying the present invention for achieving control as explained with reference to Figure 3. The apparatus includes an X-register XR for storing the current position of a cutter in terms of its distance from the centre of a workpiece, the content of the register being incremented or decremented by pulses FP which are generated whenever the cutter is moved radially with respect to the workpiece, this upcount/downcount operation depending upon the direction of cutter movement; an arithmetic circuit RVC which receives information relating to circumferential speed $V_c$ and the current position X of the cutter, i.e., the radius of the workpiece, and responds by performing the calculation $N_s=V_c/2\pi X$ to compute the speed $N_s$ of the spindle drive motor; a comparator circuit COM for comparing the magnitude of the motor speed $N_s$ against that of a base speed $N_b$; a maximum cutter cross feed rate arithmetic circuit MFRC which receives information indicative of circumferential speed $V_c$, cutter width $d$ and maximum cutting quantity $Q_{max}$, and responds by computing the maximum cutter cross feed rate $f_{rmax}$ ($=Q_{max}/V_c \cdot d$); a register FRR for storing the maximum cutter cross feed rate $f_{rmax}$; a feed rate command circuit FRC which receives the information indicative of $N_s$, $N_b$, $f_{rmax}$ and the results of the comparison as provided by the comparator circuit COM, and responds by delivering the maximum cutter cross feed rate $f_{rmax}$ when $N_s \geq N_b$ and by performing the operation

$$f_{rmax} \cdot \frac{Ns}{Nb}$$

when $N_s<N_b$, to provide a command signal in the form of a cutter cross feed rate command $f_r$ which will be $f_{rmax}$ or

$$f_{rmax} \cdot \frac{Ns}{Nb}$$

depending on the result of the foregoing operations; a speed control circuit VC for controlling the speed of a cutter drive motor MT in response to the feed rate command $f_r$; and a controller CN for controlling such items as the operational timing of the foregoing circuits as well as the processing of arithmetic operations. The speed control circuit VC has a pulse interpolator PDC which executes pulse interpolation on the basis of the cutter cross feed rate command $f_r$ and a X-direction command value $X_c$, obtained from a medium such as a paper tape which is not shown, that constrains the distance of cutter movement in the X-direction, the pulse interpolator delivering a pulse train $X_p$ whose frequency conforms to the command rate $f_r$; a reversible counter RCN whose content is incremented whenever a pulse $X_p$ is generated) provided that the cutter is moving in the positive direction) and decremented whenever a feedback pulse FP is produced in response to a prescribed distance of cutter movement, the value stored in the counter thus being equivalent to a position deviation $e$, specifically the difference between the actual amount of cutter movement and the amount by which the cutter has been instructed to move in order to assume a certain position; a digital/analog converter DA for generating an analog voltage which is proportional to the position deviation $e$, and an amplifier AMP. The system also includes a rotary encoder REC mounted on the shaft of the cutter drive motor MT so as to generate a single feedback pulse FP whenever the motor MT revolves through a specified amount, that is to say whenever the cutter moves a prescribed distance.

The system depicted in Fig. 4 operates as follows. First the maximum cutter cross feed rate $f_{rmax}$ is determined in arithmetic circuit MRFC, in dependence upon $V_c$, d and $Q_{max}$, using equation (3) and $f_{rmax}$ is then stored in register FRR, while the speed $N_s$ of the spindle drive motor is determined by means of arithmetic circuit RVC on the basis of the workpiece radius (position) stored in X-register XR (and in dependence upon $V_c$, the desired circumferential velocity). Although the content of X-register XR is not equivalent to the radius of the workpiece (and therefore indicative of diameter D) before the workpiece and cutter are brought into contact, this does not give rise to any difficulties because the cutting operation will not yet have begun before contact is made. Next the comparator circuit COM compares $N_s$, from RVC, against $N_b$ and delivers the result, i.e. $N_s \geq Nb$ or $N_s<N_b$, to the feed rate command circuit FRC which responds by supplying the speed control circuit VC with a command signal $f_r$ indicative of cutter cross feed rate $f_{rmax}$ when $Ns \geq N_b$ or

$$f_{rmax} \cdot \frac{Ns}{Nb}$$

when $N_s<N_b$. The speed control circuit $V_c$ controls the cutter feed rate in response to this instruction. More specifically, pulse interpolator PDC performs pulse interpolation on the basis of the X-direction command value $X_c$ and the cross feed rate command $f_r$ and supplies a train of pulses $X_p$ to the reversible counter RCN. The digital content of the counter RCN is then converted into an analog quantity which is subsequently amplified to actuate the cutter drive motor MT that moves the cutter (not shown). When the motor MT has rotated through a prescribed number of revolutions, the rotary encoder REC issues a feedback pulse $F_p$ which decrements the value stored in the reversible counter RCN. This feedback pulse $F_p$ is also applied to X-register XR and either increments or decrements its stored value depending upon whether the cutter has been moved in the positive or negative direction, respectively. Repeats of the foregoing operation thus allow the cutter to be fed in accordance with the feed rate command $f_r$ at all times.

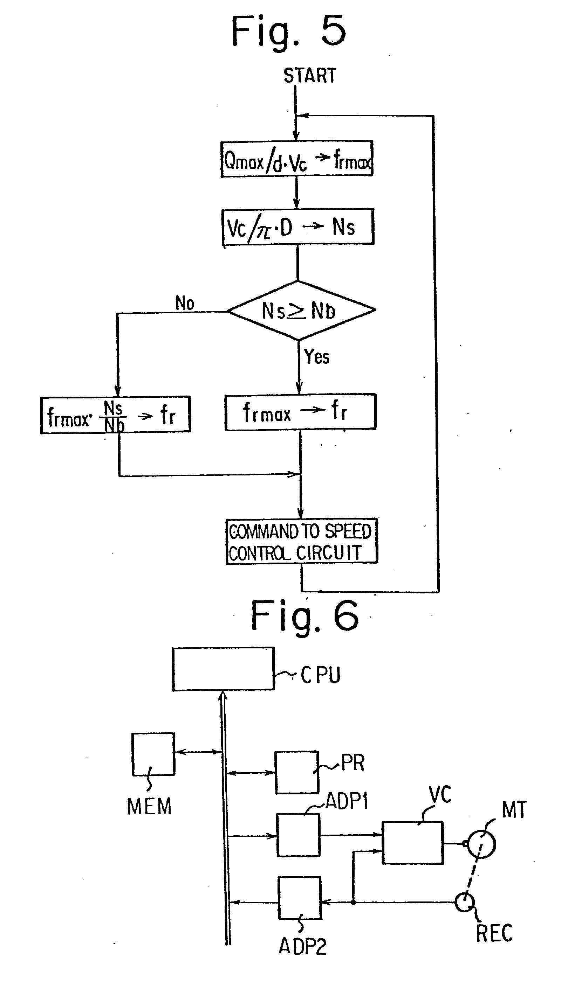

Cutter feed rate control according to the present invention can be more fully understood from the flow chart of Fig. 5 which is self-explanatory.

While the present invention has been illustrated by means of the embodiment of Fig. 4 which is provided with an arithmetic circuit for computing the maximum cutter cross feed rate $f_{rmax}$, this value is a constant which may be obtained in advance by any suitable means if the motor characteristic, cutter width $d$ and circumferential speed $V_c$ have been decided. The value can be entered by means such as a tape and stored in, say, a register located in the speed command circuit. It should also be noted that while the arrangement of Fig. 4 includes individual units of hardware for the arithmetic and comparison operations, the present invention can be embodied by utilizing a processing unit such as a microcomputer. One example of an embodiment employing a processing unit is shown in Fig. 6 in which parts corresponding to parts shown in Fig. 4 are denoted by like reference numerals and need not be described again here.

The arrangement of Fig. 6 includes a control processing unit CPU, a memory MEM for storing data and the results of arithmetic operations, a program memory $P_r$ for storing a processing program which is programmed in accordance with the flow chart of Fig. 5, interfaces $ADP_1$, $ADP_2$ provided between servo control circuits, and a feed rate control circuit $V_c$. Common use can be made of memory MEM and program memory $P_r$.

It will be understood that embodiments of the present invention can allow the performance of a motor to be utilized to the fullest possible extent while the circumferential speed of a workpiece is held constant, and can permit a marked reduction in cutting time. The invention therefore offers a favourable cost/performance characteristic especially when applied to a lathe, since a workpiece can be machined without unnecesary restrictions being imposed by the diameter of the workpiece.

Embodiments of the present invention provide a method of, and apparatus for, controlling the cross feed rate of a cutter in a machine tool of the type in which a spindle is so rotated by an electric motor having a constant torque characteristic region and a constant output characteristic region as to render constant the circumferential speed of a workpiece whilst the workpiece is subjected concurrently to a machining operation by moving a cutter into contact therewith. The apparatus includes means for computing the maximum cutter feed rate from the desired circumferential speed $V_c$ of the workpiece, the cutting width $d$ of the cutter and the maximum cutting quantity $Q_{max}$ which is determined by the maximum power $P_{max}$ of the motor, means for computing a spindle speed $N_s$ from the circumferential speed $V_c$ and the outer diameter D of the workpiece, means for comparing the magnitudes of a base speed $N_b$ and the spindle speed $N_s$, where the base speed $N_b$ is defined as the spindle speed at which there is a transition from the constant torque characteristic region of the motor to the constant output characteristic region thereof, and means for computing the cutter cross feed rate $f_r$ from $f_{rmax}$, $N_s$ and $N_b$. The cutter is fed at the rate $f_{rmax}$ when $N_s \geq N_b$ and at the rate $f_r$ when $N_s < N_b$, whereby a cutting operation is performed utilizing the power of the motor to the fullest possible extent.

## Claims

1. A method of machining a workpiece, in which a workpiece is rotated on a spindle driven by an electric motor having a constant torque characteristic operating region and a constant output power characteristic operating region, and in which motor speed is controlled so that the circumferential speed of the workpiece is maintained constant whilst a cutting machines the circumference thereof (at least until a maximum motor speed is attained), characterised by:—

storing a maximum cutter cross feed rate $f_{rmax}$ which is computed from the constant circumferential speed $V_c$ of the workpiece, a cutting width $d$ of the cutter, and a maximum cutting quantity $Q_{max}$ determined by the maximum power $P_{max}$ of the motor;
computing spindle speed $N_s$ in accordance with the equation $N_s = V_c/\pi . D$ where D is the cutting diameter of the workpiece;
comparing the magnitude of the spindle speed $N_s$ with the magnitude of a predetermined base speed $N_b$, defined as a spindle speed at which there is a transition from the constant torque characteristic operating region of the motor to the constant output power characteristic operating region thereof; and
feeding the cutter at the cross feed rate $f_{rmax}$ when $N_s \geq N_b$ and at a cross feed rate which is reduced in conformance with the spindle speed $N_s$ when $N_s < N_b$.

2. A method as claimed in claim 1, wherein when $N_s < N_b$ the cutter is fed at a cross feed rate $f_r$ which is computed from the equation $f_r = f_{rmax} . N_s/N_b$.

3. A method as claimed in claim 1 wherein the maximum cross feed rate $f_{rmax}$ is computed from the equation $f_{rmax} = Q_{max}/d . V_c$.

4. Apparatus for machining a workpiece, in which the workpiece is rotated on a spindle driven by an electric motor having a constant torque characteristic operating region and a constant output power characteristic operating region, the apparatus comprising means for controlling the speed of the motor so that the circumferential speed of the workpiece is maintained constant whilst a cutter of the apparatus machines the periphery thereof (at least until a maximum motor speed is attained), characterised by:—

memory means for storing a maximum cutter cross feed rate $f_{rmax}$ (which maximum cross feed rate depends upon the constant circumferential speed $V_c$ of the workpiece, a cutting width $d$ of the cutter, and a maximum cutting quantity $Q_{max}$ determined by the maximum power $P_{max}$ of the motor);

spindle speed computing means for computing spindle speed $N_s$ in accordance with the equation $N_s = V_c/\pi . D$ where D is the cutting diameter of the workpiece;

comparing means for comparing the magnitudes of a predetermined base speed $N_b$ and the computer spindle speed $N_s$, where the base speed $N_b$ is defined as a spindle speed at which there is a transition from the constant torque characteristic operating region of the motor to the constant output power characteristic operating region thereof;

cutter feed rate computing means for computing a cutter cross feed rate $f_r$, in accordance with the maximum cutter cross feed rate $f_{rmax}$, the predetermined base speed $N_b$ and the computed spindle speed $N_s$, which is reduced in conformance with the computed spindle speed $N_s$; and

means operable to deliver cutter feed rate command signals such that the maximum feed rate $f_{rmax}$ is commanded when $N_s \geqslant N_b$ and such that a feed rate $f_r$ is commanded when $N_s < N_b$.

5. Apparatus as claimed in claim 4, wherein the cutter feed rate computing means compute $f_r$ in accordance with the equation $f_r = f_{rmax} . N_s/N_b$.

6. Apparatus as claimed in claim 4 or 5, further comprising computing means for computing the maximum cutter feed rate $f_{rmax}$ in accordance with the equation $f_{rmax} = Q_{max}/d.V_c$, in dependence upon maximum cutting quantity $Q_{max}$, the constant circumferential speed $V_c$ and the cutter width $d$.

7. Apparatus as claimed in claim 4, further comprising memory means for storing the radial distance from the centre of the workpiece to the current position of the cutter, the content stored in said memory means being incremented or decremented whenever the cutter moves radially with respect to the centre of the workpiece by a prescribed amount and in dependence upon the direction of cutter movement, the value of said spindle speed $N_s$ being obtained by utilizing the content stored in said memory means as a value of workpiece radius, from which D is derived.

8. A machine tool, including a motor, a spindle for mounting a workpiece, which spindle is driven by the motor, a cutter for machining the workpiece, and apparatus as claimed in any one of claims 4 to 7.

9. A machine tool as claimed in claim 8, being a lathe.

## Patentansprüche

1. Verfahren zum Bearbeiten eines Werkstücks, bei welchem ein Werkstück auf einer Spindel gedreht wird, die durch einen Elektromotor angetrieben wird, der eine Betriebsbereich mit gleichbleibendem Drehmoment und einen Betriebsbereich mit gleichbleibender Ausgangsleistung aufweist, und bei welchem die Motorgeschwindigkeit so gesteuert wird, daß die Umfangsgeschwindigkeit des Werkstücks konstant gehalten wird, während ein Schneidwerkzeug seinen Umfang bearbeitet (wenigstens, bis eine maximale Motorgeschwindigkeit erreciht ist),

dadurch gekennzeichnet, daß eine maximale Planvorschubsgeschwindigkeit $f_{rmax}$ des Schneidwerkzeugs gespeichert wird, welche berechnet wird aus der konstanten Umfangsgeschwindigkeit $V_c$ des Werkstücks, einer Schnittbreite d des Schneidwerkzeugs und einer maximalen Schnittmenge $Q_{max}$, die durch die Maximalleistung $P_{max}$ des Motors bestimmt wirt,

daß eine Spindelgeschwindigkeit $N_s$ gemäß der Gleichung $N_s = V_c/\pi . D$ berechnet wird, worin D der Schnittdurchmesser des Werkstücks ist,

daß die Größe der Spindelgeschwindigkeit $N_s$ verglichen wird mit der Größe einer vorbestimmten Basisgeschwindigkeit $N_b$, die als die Spindelgeschwindigkeit definiert ist, bei welcher ein Übergang von dem Betriebsbereich des Motors mit gleichbleibendem Drehmoment auf seinen Betriebsbereich mit gleichbleibender Ausgangsleistung stattfindet,

und daß des Schneidwerkzeug mit der Planvorschubsgeschwindigkeit $f_{rmax}$ vorgeschoben wird, wenn $N_s \geqslant N_b$ gilt, und mit einer Planvorschubsgeschwindigkeit, welche in Übereinstimmung mit der Spindelgeschwindigkeit $N_s$ vermindert ist, wenn $N_s < N_b$ gilt.

2. Verfahren nach Anspruch 1, dadurch gekennzeichnet, daß, wenn $N_s < N_b$ gilt, das Schneidwerkzeug mit einer Vorschubsgeschwindigkeit $f_r$ vorgeschoben wird, welche aus der Gleichung $f_r = f_{rmax} . N_s/N_b$ berechnet wird.

3. Verfahren nach Anspruch 1, dadurch gekennzeichnet, daß die maximale Planvorschubsgeschwindigkeit $f_{rmax}$ aus der Gleichung $f_{rmax} = Q_{max}/d . V_c$ berechnet wird.

4. Vorrichtung zum Bearbeiten eines Werkstücks, bei welcher das Werkstück auf einer Spindel gedreht wira, die durch einen Elektromotor angetrieben wird, der eine Betriebsbereich mit gleichbleibendem Drehmoment und einen Betrieb'sbereich mit gleichbleibender Ausgangsleistung aufweist, mit einer Einrichtung zum Steuern der Geschwindigkeit des Motors in der Weise, daß die Umfangsgeschwindigkeit des Werkstücks konstant gehalten wird, während ein Schneidwerkzeug der Vorrichtung den Umkreis der Werkstücks bearbeitet (wenigstens, bis eine maximale Motorgeschwindigkeit erreicht ist),

gekennzeichnet durch

eine Speichereinrichtung zum Speichern einer maximalen Planvorschubsgeschwindigkeit $f_{rmax}$ des Schneidwerkzeugs (welche maximale Planvorschubsgeschwindigkeit anhängt von der konstanten Umfangsgeschwindigkeit $V_c$ des Werkstücks, einer Schnittbreite d des Schneidwerkzeugs und einer maximalen Schnittmenge $Q_{max}$, die durch die maximale Leistung $P_{max}$ des Motors bestimmt wird),
eine Spindelgeschwindigkeit—Berechnungseinrichtung zum Berechnen der Spindelgeschwindigkeit $N_x$ gemäß der Gleichung $N_s = V_c/\pi \times D$, worin D der Schnittdurchmesser des Werkstücks ist,
eine Vergleichseinrichtung zum Vergleichen der Größen einer Vorbestimmten Basisgeschwindigkeit $N_b$ und der berechneten Spindelgeschwindigkeit $N_s$, wobei die Basisgeschwindigkeit $N_b$ definiert ist als die Spindelgeschwindigkeit, bei welcher ein Übergang von dem Betriebsbereich des Motors mit gleichbleibendem Drehmoment auf dessen Betriebsbereich mit gleichbleibender Ausgangsleistung stattfindet, eine Vorschubsgeschwindigkeit-Berechnungseinrichtung zum Berechnen einer Planvorschubsgeschwindigkeit $f_r$ des Schneidwerkzeugs gemäß seiner maximalen Planvorschubsgeschwindigkeit $f_{rmax}$, der vorbestimmten Basisgeschwindigkeit $N_b$ und der berechneten Spindelgeschwindigkeit $N_s$, welche in Übereinstimmung mit der berechneten Spindelgeschwindigkeit $N_s$ vermindert wird,
sowie eine Einrichtung, die tatig ist, um Schneidwerkzeug-Vorschubgeschwindigkeit-Befehlssignale derart zu liefern, daß die maximale Vorschubsgeschwindigkeit $f_{rmax}$ befohlen wird, wenn $N_s \geqslant N_b$ gilt, und derart, daß eine Vorschubsgeschwindigkeit $f_r$ befohlen wird, wenn $N_s < N_b$ gilt.

5. Vorrichtung nach Anspruch 4, dadurch gekennzeichnet, daß die Vorschubsgeschwindigkeit-Berechnungseinrichtung $f_r$ gemäß der Gleichung $f_r = f_{rmax} \cdot N_s/N_b$ berechnet wird.
6. Vorrichtung nach Anspruch 4 oder 5, gekennzeichnet durch eine Berechnungseinrichtung zum Berechnen der maximalen Vorschubgeschwindigkeit $f_{rmax}$ des Schneidwerkzeugs gemäß der Gleichung $f_{rmax} = Q_{max}/d \cdot V_c$ in Abhängigkeit von der maximalen Schnittmenge $Q_{max}$, der konstanten Umfangsgeschwindigkeit $V_c$ und der Schnittbreite d.
7. Vorrichtung nach Anspruch 4, gekennzeichnet durch eine Speichereinrichtung zum Speichern des Radialabstandes von dem Zentrum des Werkstücks zu der laufenden Stellung des Schneidwerkzeugs, wobei der in der Speichereinrichtung gespeicherte Inhalt inkrementiert oder dekrementiert wird, wenn sich das Schneidwerkzeug radial bezüglich des Zentrums des Werkstücks um einen vorgeschriebenen Betrag verschiebt, und in Abhängigkeit von der Richtung der Verschiebung des Schneidwerkzeugs, wobei der Wert der Spindelgeschwindigkeit $B_s$ erhalten wird unter Verwendung des Inhalts, der in der Speichereinrichtung gespeichert ist als ein Wert des Werkstücksradius, von welchem D abgeleitet wird.

8. Werkzeugmaschine, gekennzeichnet durch einen Motor, eine Spindel zum Anbringen eines Werkstücks, welche durch den Motor angetrieben wird, ein Schneidwerkzeug zum Bearbeiten des Werkstücks sowie eine Vorrichtung nach einem der Ansprüche 4 bis 7.

9. Werkzeugmaschine nach Anspruch 8, dadurch gekennzeichnet, daß sie eine Drehbank ist.

**Revendications**

1. Procédé pour usiner une pièce, dans lequel la pièce tourne sur une broche entraînée par un moteur électrique ayant un domaine de fonctionnement caractéristique à couple constant et un domaine de fonctionnement caractéristique à puissance de sortie constante et dans lequel la vitesse du moteur esr réglée de telle manière que la vitesse périphérique de la pièce soit maintenue constante pendant qu'un outil de coupe en usin la circonférence (au moins jusqu'à ce qu'une vitesse maximale du moteur soit atteinte), caractérisé par le fait de:

—— enregistrer une vitesse d'avance transversale maximale $f_{rmax}$ de l'outil de coupe, qui est calculée à partir de la vitesse périphérique constante $V_c$ de la pièce usinée, une largeur de coupe $d$ de l'outil de coupe et une quantité de coupe maximale $Q_{max}$ déterminée par la puissance maximale $P_{max}$ du moteur;
—— calculer la vitesse de broche $N_s$ d'après l'équation $N_s = V_c/\pi \cdot D$, dans laquelle D est le diamètre d'usinage de la pièce;
—— comparer la valeur de la vitesse $N_s$ de la broche avec la valeur d'une vitesse de base $N_b$ déterminée à l'avance et définie comme étant une vitesse de broche à laquelle il y a passage du domaine de fonctionnement caractéristique à couple constant du moteur à son domaine de fonctionnement caractéristique à puissance de sortie constante, et
—— faire avancer l'outil de coupe à une vitesse d'avance transversale $f_{max}$ lorsque $N_s \geq N_b$ et à une vitesse d'avance transversale qui diminue avec la vitesse $N_s$ de la broche lorsque $N_s < N_b$.

2. Procédé selon la revendication 1, dans lequel, lorsque $N_s < N_b$, l'outil de coupe avance à une vitesse d'avance transversale $f_r$ qui est calculée d'après l'équation $f_r = f_{rmax} \cdot N_s/N_b$.

3. Procédé selon la revendication 1, dans lequel la vitesse d'avance transversale maximale $f_{rmax}$ est calculée d'après l'équation $f_{rmax}=Q_{max}/d \cdot V_c$.

4. Appareil permettant l'usinage d'une pièce, dans lequel la pièce à usiner tourne sur une broche entraîné par un moteur électrique ayant un domaine de fonctionnement caractéristique à couple constant et un domaine de fonctionnement caractéristique à puissance de sortie constante, l'appareil comprenant un dispositif réglant la vitesse du moteur de telle manière que la vitesse périphérique de la pièce usinée soit maintenue constante pendant qu'un outil de coupe de l'appareil usine sa circonférence (au moins jusqu'à ce qu'une vitesse maximale du moteur soit atteinte), caractérisé en ce qu'il comprend:

— une mémoire permettant d'enregistrer une vitesse d'avance transversale maximale $f_{rmax}$ (qui dépend de la vitesse périphérique constante $V_c$ de la pièce usinée, d'une largeur de coupe $d$ de l'outil de coupe et d'une quantité de coupe maximale $Q_{max}$ déterminée par la puissance maximale $P_{max}$ du moteur);

— un dispositif de calcul de la vitesse de la broche permettant de calculer la vitesse $N_s$ de la broche d'après l'équation $N_s=V_c/\pi \cdot D$, dans laquelle D est le diamètre d'usinage de la pièce;

— un dispositif de comparison permettant de comparer les valeurs d'une vitesse de base $N_b$ déterminée à l'avance avec la vitesse de broche calculée $N_s$, la vitesse de base $N_b$ étant définie comme étant la vitesse de broche à laquelle il y a passage du domaine de fonctionnement caractéristique à couple constant du moteur à son domaine de fonctionnement caractéristique à puissance de sortie constante;

— un dispositif de calcul de vitesse d'avance de l'outil de coupe permettant de calculer une vitesse d'avance transversale $f_r$ de l'outil de coupe d'après la vitesse d'avance transversale maximum $f_{rmax}$ de l'outil de coupe, la vitesse de base $N_b$ déterminée à l'avance et la vitesse de broche calculée $N_s$, laquelle diminue avec la vitesse de broche calculée $N_s$; et

— un dispositif pouvent émettre des signaux de commande de la vitesse d'avance de l'outil de manière à commander la vitesse d'avance maximale $f_{rmax}$ lorsque $N_s \geq N_b$, et la vitesse d'avance $f_r$ lorsque $N_s < N_b$.

5. Appareil selon la revendication 4, dans lequel le dispositif calculant la vitesse d'avance de l'outil de coupe calcule $f_r$ d'après l'équation $f_r=f_{rmax} \cdot N_s/N_b$.

6. Appareil selon l'une des revendications 4 ou 5, comprenant de plus un dispositif de calcul permettant de calculer la vitesse d'avance maximale de l'outil de coupe $f_{rmax}$ d'après l'équation $f_{rmax}=Q_{max}/d \cdot V_c$ en fonction de la quantité de coupe maximale $Q_{max}$, de la vitesse périphérique constante $V_c$ et de la largeur $d$ de l'outil de coupe.

7. Appareil selon la revendication 4, comprennant de plus une mémoire permettant d'enregistrer la distance séparant, dans le sens radial, le centre de la pièce usinée à la position courante de l'outil de coupe, le contenu enregistré dans cette mémoire étant augmenté ou diminué chaque fois que l'outil de coupe se déplace dans le sens radial par rapport au centre de la pièce usinée d'une quantité fixée et suivant le sens du déplacement de l'outil de coupe, la valeur de la vitesse de broche $N_s$ étant obtenue à partir du contenu enregistré dans la mémoire comme une valeur du rayon de la pièce usinée d'où D est déduit.

8. Machine-outil comprenant un moteur, une broche portant une pièce à usiner et entraînée par le moteur, un outil de coupe pour l'usinage de la pièce et un appareil selon l'une quelconque des revendications 4 à 7.

9. Machine-outil selon la revendication 8 constituée par un tour.

0018710

Fig. 1

Fig. 2

(a)

(b)

(c)

(d)

1

# Fig. 3

$+X \longleftrightarrow -X$

(a)

$X_1$    0    W

T

(b)

$N_{max}$

$N_b$

$N_s$ (rpm)

← POSITION OF CUTTER

(c)

CIRCUMFERENTIAL SPEED $V_c$

← POSITION OF CUTTER

(d)

$Q_{max}$

$Q_o$

CUTTING QUANTITY Q

← POSITION OF CUTTER

(e)

$f_{rmax}$

$f_{ro}$

FEED RATE

← POSITION OF CUTTER

# Fig. 4

**0018710**

# Fig. 5

START

$Q_{max}/d \cdot V_c \to f_{rmax}$

$V_c/\pi \cdot D \to N_s$

$N_s \geq N_b$

No → $f_{rmax} \cdot \dfrac{N_s}{N_b} \to f_r$

Yes → $f_{rmax} \to f_r$

COMMAND TO SPEED CONTROL CIRCUIT

# Fig. 6

CPU

MEM

PR

ADP1

VC

MT

ADP2

REC

4